(19) Europäisches Patentamt / European Patent Office / Office européen des brevets

(11) **EP 2 914 667 B1**

(12) **EUROPEAN PATENT SPECIFICATION**

(45) Date of publication and mention of the grant of the patent:
**16.08.2017 Bulletin 2017/33**

(21) Application number: **13774364.7**

(22) Date of filing: **09.10.2013**

(51) Int Cl.:
*C09D 5/00* (2006.01)

(86) International application number:
**PCT/EP2013/003034**

(87) International publication number:
**WO 2014/067613 (08.05.2014 Gazette 2014/19)**

(54) **HEAT-SHIELDING COATING COMPOSITION COMPRISING BLUE AND GREEN PHTHALOCYANINE PIGMENTS**

WÄRMEABSCHIRMENDE BESCHICHTUNGSZUSAMMENSETZUNG MIT BLAUEN UND GRÜNEN PHTHALOCYANINPIGMENTEN

COMPOSITION DE PIGMENTS NOIRS POUR REVÊTEMENT DE PROTECTION THERMIQUE, REVÊTEMENT DE PROTECTION THERMIQUE L'UTILISANT ET UTILISATION DE LA COMPOSITION POUR L'OMBRAGE ET LE REVÊTEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.11.2012 JP 2012243477**

(43) Date of publication of application:
**09.09.2015 Bulletin 2015/37**

(73) Proprietor: **Clariant International Ltd**
**4132 Muttenz (CH)**

(72) Inventors:
• **KITAO, Shinsuke**
  **Kakegawa-City**
  **Shizuoka-pref. 436-0026 (JP)**

• **HORI, Shoko**
  **Kakegawa City**
  **Shizuoka -pref. 436-0086 (JP)**

(74) Representative: **Mikulecky, Klaus et al**
**Clariant Produkte (Deutschland) GmbH**
**Patent & License Management Chemicals**
**Industriepark Höchst, G 860**
**65926 Frankfurt am Main (DE)**

(56) References cited:
EP-A1- 1 127 926    WO-A1-2005/030878
WO-A2-03/054071    US-A- 5 540 998

**Description**

BACKGROUND OF THE INVENTION

1. Field of the Invention

The present invention relates to a black pigment composition for a heat-shielding coating.

2. Description of the Related Art

During the summer, heat generated by sunlight radiated onto the roofs and outer walls of buildings and paved streets accumulates. Due to this, cooling load increases during the day and the heat is released during the night, which causes a phenomenon known as the heat island phenomenon, in which ambient temperature does not fall even after sundown in urban areas, and is becoming a serious problem. Since the temperature does not fall even during the night, air-conditioners are operated during the night as well, and the hot air generated therefrom serves to enhance the heat island phenomenon.

In order to relieve this heat island phenomenon, the development of heat-insulating coatings is proceeding, which coatings reduce a phenomena that causes sunlight energy to diffuse and penetrate into buildings. To this end, such coatings are furnished with heat insulating properties using a material having low thermal conductivity and applied to building roofs and outer walls. However, when a certain degree of heat insulating effect is attempted to be imparted to these coatings, there is the problem of increasing material costs and application costs since it is necessary to increase the film thickness of the coatings.

Another principle applied for the purpose of relieving the heat island phenomenon consists in applying, to building roofs, outer walls and the like, a coating to which heat shielding properties are imparted and, thereby not allowing sunlight energy to accumulate inside the buildings by causing it to be reflected from the roofs and outer walls thereof. According to this method, since considerable shielding effects can be obtained in comparison with a heat-insulating coating even if the thickness of the applied coating is low, development of such a coating is currently being proceeded with actively by numerous firms.

An effective heat-shielding coating is a white coating obtained by dispersing a white pigment, which does not absorb light of a wavelength from the visible region to the infrared region, in a resin and a solvent. Such a white coating typically shows the greatest light reflecting effects. However, when a white coating is applied to building outer walls, warehouse roofs and the like, it is extremely glaring due to its high reflectance, thereby making it unpleasant for nearby residents, resulting in troubles. For reducing such glaringness, the addition of carbon black to the coatings has been considered as a coloring means. However, in this case, though glaringness is suppressed, a further problem occurs in that heat-shielding effects decrease due to the infrared radiation absorption of carbon black.

Development is also proceeding on a method for enhancing dimming effects by forming a heat-shielding coating using a chromatic pigment which absorbs less light of a wavelength in the infrared region instead of carbon black. As an example thereof, JP05293434A, for example, describes a heat-shielding plate composed of a metal sheet, an underlayer and a top coat heat-shielding layer, where the top coat heat-shielding layer is comprised of a black heat-shielding coating which contains a chromatic pigment having high infrared radiation transmittance. Since the underlayer comprises a white pigment such as rutile titanium dioxide, infrared radiation which has passed through the chromatic pigment is reflected by the underlayer and additionally by the metal sheet, and heat shielding performance is thus produced.

There are two ways to use such a black heat-shielding coating:

1) the coating is directly used as a black coating, or applied in the form of an achromatic coating such as a gray coating after being adjusted in respect to its brightness, and
2) the achromatic heat-shielding coating mentioned above in 1) is mixed with a chromatic coating such as YMC, and then used for shading in order to adjust the brightness and chroma of a chromatic coating.

In the case of using the coating according to 1) above, the coating is required to have high light absorbance in the visible region (black) and, at the same time, have high light transmittance in the adjacent infrared region in order to reflect the infrared wavelength component of incident sunlight at the substrate, and it is also required to use a pigment which is as inexpensive as possible, which can be used as an alternative to carbon black.

In the case of using the coating for brightness adjustment as in 2) above, the pigment composition for heat-shielding coatings is required to not only have high transmittance in the infrared region, but also have light absorbance characteristics which facilitate color matching coinciding with a desired color. According to a usual method for shading a coating, in a first step, a primary color coating is selected, or, if necessary, a plurality of primary color coatings are mixed, to obtain a color near a desired hue. Next, in a second step, a white or black coating is mixed in for adjusting the chroma and brightness to obtain a desired hue, chroma and brightness. Such color shading is considered to be one of the steps in the coating process for which the greatest expertise is required, and whether or not that shading is successfully implemented has a considerable effect on the finished quality.

In the place of the conventional shading operation which needs skill, computerized color matching is becoming increasingly popular, in which the color parameters of chromatic and achromatic primary color coatings are registered in a computer, a desired parameter is also inputted, and formulation ratios of the respective coatings are determined by computer calculations using the registered parameters. However, if the computerized color matching is applied to heat-shielding coatings, inferior heat-shielding may occur when using the existing formulations. Simple replacement of carbon black by a black pigment composition should impart heat-shielding properties to existing formulations.

In the conventional usual methods for preparing formulations for hue adjusting by mixing chromatic coatings with black coatings, carbon black pigment-containing black coatings have been standardly used. Therefore, in the case of heat-shielding coatings as well, it is preferable for black coatings for hue-adjusting a chromatic coating to be prepared by providing a black heat-shielding coating which approximates the hue of carbon black and then mixing such a coating with chromatic coatings to obtain necessary brightness, chroma etc., in terms of improving the efficiency of shading operations.

However, black coatings based on carbon black are not preferable for use as a heat-shielding coating since, as mentioned above, they strongly absorb the infrared radiation of sunlight due to their high absorbance in the infrared region. Due to this, there exists a strong demand for black coatings which have low light absorption in the infrared region (high light transmittance in the infrared region) for use as an alternative to conventional black coatings based on carbon black. In this case, as was previously described, such heat-shielding black coatings are required to have a hue that approximates as closely as possible that of a coating made of carbon black, or in other words, are required to use coating compositions which show as little color difference as possible from carbon black pigment, in terms of carrying out shading based on the existing knowledge.

In respect to pigments for forming black heat-shielding coatings used for the above purpose, numerous properties have been required in addition to the above-mentioned optical properties, such as they should not contain chromium or other toxic heavy metals or should show good pigment dispersion stability; and there is a particularly strong demand that they have a high level of weather resistance when placed in a harsh summer environment. In this case, not only is a hue required to approximate a coated article containing carbon black prior to exposure to sunlight, but properties are required which approximate carbon black coatings after exposure to sunlight as well.

In response to such needs, JP2009202494A, for example, describes a method in which a perylene pigment, which is black, is used. However, the problem of this method is the high price of the pigment used, likely leading to increased coating costs. In addition, when the coating is color-lightened to, e.g., gray, for use in adjustment of brightness, the green color becomes very conspicuous. Consequently, though the use of the coating in a dark color does not causes significant problems, said method has a drawback in that a shading operation, while correcting the green color, becomes very difficult when the coating is mixed with other chromatic coatings for color-lightening and shading.

As means for solving the above problems, a method has been proposed in the experimental part of JP2011068737A, for example, in which a black heat-shielding coating that approximates carbon black is obtained by three-color mixing using three types of pigments, pigment yellow 184, pigment violet 19 and pigment blue 15:3. With this method, it is relatively easy to achieve color adjustment to a black color that approximates carbon black coatings in the case of a dark black color having low brightness, but it has a problem in that if the heat-shielding black coating is diluted, or mixed with a white coating to increase the brightness, it is colored from achromatic to chromatic, and as a result thereof, tends to show a large color difference from carbon black coatings. In addition, the heat-shielding black coating according to this method has inadequate weather resistance, and though it approximates carbon black prior to exposure, it undergoes a considerable color change during exposure to sunlight, thereby resulting in the significant problem of the heat-shielding properties being greatly reduced.

As has been described above, no heat-shielding black pigment composition has yet been found which shows high infrared radiation transmittance and further a hue which approximates that of carbon black coatings over a wide range from dark to light color regions, has weather resistance satisfactory in practical terms, and can be used as an alternative to inexpensive carbon black.

WO 03/054071 A2 discloses a solar heat-reflecting plastic composition which comprises at least one resin and at least organic pigments so as to form a black, brown, gray, violet, blue or green color.

US 5,540,998 discloses a solar heat-shielding coating composition consisting mainly of two kinds or more of pigments selected from red, orange, yellow, green, blue and purple pigments in such a manner as to yield a color of low lightness.

WO 2005/030878 A1 discloses IR reflective black pigment compositions comprising a halogenated copper phthalocyanine and a perylene tetracarboxylic acid diimide.

EP 1 127 926 A1 discloses a heat-radiation shield coating composition containing a black pigment which exhibits a reflectance of not below 8 % of the solar reflection in the IR region.

SUMMARY OF THE INVENTION

An object of the present invention is to provide a black pigment composition for heat-shielding coatings, which has high infrared radiation transmittance, facilitates hue adjustment when being mixed with a chromatic coating and a white coating since it approximates the hue of carbon black pigment in not only in a dark color, but also in a light color as well, has high weather resistance, and is also advantageous in terms of cost, as well as a heat-shielding coating which uses the same, and the use thereof for shading and coating.

As a result of conducting extensive research to resolve the drawbacks of the related art in consideration of these circumstances, the present inventors obtained the following guidelines for achieving the object of the present invention:

(1) When a phthalocyanine blue pigment and a phthalocyanine green pigment are combined as essential elements instead of combining ordinary yellow, magenta and cyan pigments, the resulting weather resistance is remarkably improved.

(2) It is difficult to achieve a hue that approximates that of carbon black simply by combining the two components, a phthalocyanine blue pigment and a phthalocyanine green pigment. In order to reduce the difference (color difference) from the hue of carbon black, it is necessary to further add a chromatic pigment as a third component and, if necessary, a further chromatic pigment as a fourth component.

(3) In addition, it is often the case that a desired color tone cannot be obtained even by combining a third, fourth or further chromatic pigment with a phthalocyanine blue pigment and a phthalocyanine green pigment to prepare a dark-colored black coating which approximates carbon black pigment (such as that having such a black color as N-1 of the Munsell color system), and mixing such a black coating with a further chromatic coating for shading. The reason for this is that even if a black, dark-colored coating made from chromatic pigments approximates the black color of carbon black visually, an incongruity in their visible light absorption properties causes a significant color difference when the brightness of the black coating is increased by, e.g., mixing with a white coating, because spectral differences are perceived visually. Therefore, it is necessary that the pigment composition of a heat-shielding coating for use in shading be determined while taking into account brightness which would appear after being shaded.

(4) In order to achieve the object described in (3) above, it is necessary to adjust the total amount of a phthalocyanine blue pigment and a phthalocyanine green pigment to be within a specific composition range relative to the total amount of the chromatic pigment composition for heat-shielding coatings.

On the basis of the above-mentioned guidelines, the present inventors further sought a pigment composition which provides a color difference (ΔE) of 1.5 or less compared to a carbon black coating in the light color region and has high weather resistance and, as a result, were able to obtain a pigment composition and heat-shielding black coating having a small difference of hue compared to that of carbon black even in the black, dark color region, and have completed the present invention.

Accordingly, the present invention relates to:

1. A black pigment composition for heat-shielding coatings, comprising a phthalocyanine blue pigment as a first pigment, a phthalocyanine green pigment as a second pigment, and at least one other chromatic pigment, wherein, regarding the amounts in parts by weight of the phthalocyanine blue pigment as Mb, the phthalocyanine green pigment as Mg, and the total of the at least one other chromatic pigment as Mn, wherein
Mb + Mg + Mn = 100, and wherein $0.05 < Mg/Mb < 25$ and wherein
$25 < Mg + 2.2Mb < 50$, are established, based on 100 parts by weight of the total pigment composition.

2. A black pigment composition for heat-shielding coatings as set forth in 1 above, wherein at least one pigment selected from the group consisting of C.I. Pigment Blue 15:3, Pigment Blue 15:1, Pigment Blue 15:2, Pigment Blue 15:4 and Pigment Blue 15:6 is used as the phthalocyanine blue pigment.

3. A black pigment composition for heat-shielding coatings as set forth in 1 or 2 above, wherein C.I. Pigment Green 7 and/or C.I. Pigment Green 36 are/is used as the phthalocyanine green pigment.

4. A black pigment composition for heat-shielding coatings as set forth in any of 1 to 3 above, wherein the composition comprises an inorganic chromatic pigment and/or an organic chromatic pigment as the at least one other chromatic pigment.

5. A black pigment composition for heat-shielding coatings as set forth in 4 above, wherein the inorganic chromatic pigment is at least one selected from the group consisting of cobalt blue, yellow iron oxide, viridian, zinc sulfide, lithopone, cadmium yellow, vermillion, cadmium red, chrome yellow, molybdate orange, zinc chromate, strontium chromate, ultramarine, bismuth vanadium yellow, vanadium tin yellow, vanadium zirconia yellow, ferrocyanides (Prussian blue) and phosphates (manganese violet).

6. A black pigment composition for heat-shielding coatings as set forth in 4 above, wherein the organic chromatic pigment is at least one selected from the group consisting of azo pigments, lake pigments, thioindigo pigments, anthraquinone pigments, perylene pigments, perinone pigments, diketopyrrolopyrrole pigments, dioxazine pigments, phthalocyanine pigments, quinophthalone pigments, quinacridone pigments, isoindoline pigments and isoindolinone pigments.

7. A black pigment composition for heat-shielding coatings as set forth in any of 1 to 6 above, wherein the composition consists of a phthalocyanine blue pigment as the first pigment, a phthalocyanine green pigment as the second pigment, and a third pigment as the at least one other pigment

8. A black pigment composition for heat-shielding coatings as set forth in 7 above, wherein the composition comprises an inorganic pigment as the third chromatic pigment.

9. A black pigment composition for heat-shielding coatings as set forth in 7 above, wherein the composition comprises at least one chromatic pigment selected from the group consisting of an anthraquinone pigment, a benzimidazolone pigment and a diketopyrrolopyrrole pigment as the third chromatic pigment.

10. A black pigment composition for heat-shielding coatings as set forth in 7 above, wherein the composition comprises an anthraquinone pigment C.I. Pigment Red 168 as the third chromatic pigment.

11. A black pigment composition for heat-shielding coatings as set forth in 10 above,
wherein, for the amounts in parts by weight of the phthalocyanine blue pigment as Mb, the phthalocyanine green pigment as Mg, and the third chromatic pigment as M3,

$$1 < Mb < 10,$$

$$25 < Mg < 45,$$

and

$$45 < M3 < 70,$$

are established.

12. A black pigment composition for heat-shielding coatings as set forth in any of 1 to 6 above, wherein the composition consists of a phthalocyanine blue pigment as the first pigment, a phthalocyanine green pigment as the second pigment, and third and fourth chromatic pigments as the at least one other pigment.

13. A black pigment composition for heat-shielding coatings as set forth in 12 above, wherein the third chromatic pigment is a benzimidazolone pigment, the fourth chromatic pigment is a diketopyrrolopyrrole pigment, and when the total amount in parts by weight of the third and fourth chromatic pigments is designated as M34, then

$$5 < Mb < 20,$$

$$1 < Mg < 30,$$

and

$$55 < M34 < 85$$

are established.

14. A black pigment composition for heat-shielding coatings as set forth in 12 above, wherein the composition comprises an inorganic yellow pigment as the third chromatic pigment, and a diketopyrrolopyrrole pigment and/or a naphthol pigment as the fourth chromatic pigment.

15. A black pigment composition for heat-shielding coatings as set forth in 14 above, wherein, when the total amount in parts by weight of the third and fourth chromatic pigments is designated as M34, then

$$2 < Mb < 15,$$

$$10 < Mg < 30,$$

and

$$60 < M34 < 88$$

are established.

16. A heat shielding black coating, which comprises, at least, a black pigment composition as set forth in any of 1 to 15 above, a binder, and a solvent.

17. A heat shielding black coating as set forth in 16 above, further comprising a white inorganic pigment.

18. A heat shielding black coating as set forth in 17 above, wherein the white inorganic pigment is selected from titanium oxide, zinc oxide and aluminum oxide.

19. A black heat shielding coating as set forth in any of 16 to 18 above, wherein the binder is a resin selected from an acrylic resin, an acrylic-silicone resin, a silicone resin, a fluororesin, a urethane resin, an unsaturated polyester resin and an alkyd resin.

20. Use of a heat shielding black coating according to any of 16 to 19 for shading chromatic or achromatic coatings.

21. Use of a heat shielding black coating according to any of 16 to 19 above for coating a roof or outer wall of a building.

As can be understood from the above, according to the present invention, a black pigment composition for heat-shielding coatings can be obtained, which shows solar heat shielding effects, has high weather resistance, facilitates shading of chromatic pigments since the hue thereof approximates that of carbon black even under light color conditions, and is also advantageous in terms of cost.

BRIEF DESCRIPTION OF THE DRAWINGS

FIG. 1 is a scatter diagram in which the amount in parts by weight of a phthalocyanine blue pigment (Mb) is plotted on the horizontal axis and the amount in parts by weight of a phthalocyanine green pigment (Mg) is plotted on the vertical axis; and

FIG. 2 is a drawing showing an approximation curve obtained using the least-squares method for those values of Mb and Mg of FIG. 1 for which ∆E < 1.5.

DESCRIPTION OF THE PREFERRED EMBODIMENTS

Accordingly, the present invention provides a pigment composition for heat-shielding coatings, which shows high optical transmittance in the near infrared region and also high weather resistance, has a hue which approximates that of carbon black, comprises as essential pigments thereof phthalocyanine blue and phthalocyanine green, and further comprises at least one chromatic pigment mixed therein, a heat-shielding coating based on the same, and use thereof for shading and coating.

Since carbon black pigments vary depending on the raw material, production method, particle diameter and so forth, black coatings based on carbon black pigments also vary slightly regarding their color tone. According to the present invention, Pigment Black 7 (Degussa Corp., trade name: FW200), which can be most generally used in the field of coatings, was selected as a standard pigment, and a sample was prepared in the method described below in Example 1 by coating and drying the pigment on a black/white hiding test paper specified in JIS K5602 relating to solar reflectance so as to completely conceal the black/white pattern, and the sample thus prepared was used as a dark color standard sample. As a standard sample after being shaded, a coating was prepared by mixing the above-mentioned Pigment Black 7 and rutile titanium dioxide in a weight ratio of 1:50, and then coated onto the above black/white hiding test paper to obtain a light color standard sample. The color space coordinate values of these samples are shown in Table 1. Since the light color standard sample is in the vicinity of N-5 in the Munsell color system, it is advantageously easily shaded to a color which approximates general-purpose carbon black coatings not only when shading to high brightness, but also when shading to low brightness, by using a black heat-shielding coating having a small color difference compared to the light color standard sample.

[Table 1]

|  | L* | a* | b* |
|---|---|---|---|
| Dark color standard sample | 24.86 | -0.06 | -0.90 |
| Light color standard sample | 58.72 | -0.54 | 0.00 |

"Light color" in the present invention refers to a color having high brightness in the Munsell color system and a high L* value, while "dark color" refers to a color having relatively low brightness and a low L* value.

Moreover, "color difference (∆E)" in the present invention represents a difference in hue between the light color standard sample and a sample to be measured, is typically shown as the spatial distance between the two in an L*a*b* chromaticity spatial diagram, and is a value calculated by $\Delta E = [(\Delta L^*)^2 + (\Delta a^*)^2 + (\Delta b)^2]^{1/2}$. In general, if ∆E is 1.5 or less, it is said that recognition of the color difference between two objects by the human eye becomes very difficult.

The heat-shielding black coating according to the present invention is a coating based on a pigment composition comprising phthalocyanine blue and phthalocyanine green as essential chromatic pigments and further comprising one or more chromatic pigments of another hue. Combining this plurality of chromatic pigments allows the obtaining of a heat-shielding coating, which can express a black color close to carbon black and has high weather resistance.

Both phthalocyanine blue and phthalocyanine green pigments used in the present invention have a chemical structure having a metal-containing phthalocyanine backbone, and are known to be pigments which have high weather resistance as a result of exhibiting superior overall performance, such as photostability, heat resistance and chemical resistance to acids or bases, and the like.

In contrast to phthalocyanine blue pigments having their maximum transmittance in the vicinity of 470 nm, phthalocyanine green pigments have maximum transmittance in the vicinity of 500 nm and also comparatively high absorbance in the vicinity of 400 nm. Thus, by mixing phthalocyanine blue and phthalocyanine green, phthalocyanine green can serve to partially assume the function of a yellow pigment in the YMC color-subtraction method.

Typical yellow pigments have inferior weather resistance in comparison with phthalocyanine blue and phthalocyanine green. Therefore, when they are subjected to an exposure text in the form of pigment compositions, there is tendency that only the yellow pigment will fade, black color or gray color will not be maintained after the weather resistance test, and bluish or greenish discoloration will occur. By using phthalocyanine pigments having high weather resistance according to the present invention, it becomes possible to reduce the proportion of a yellow pigment having poor weather resistance and thus improve the weather resistance of a pigment composition, but, in order to achieve black color, it is necessary to further mix in third, fourth or yet further chromatic pigments.

In the case of combining and mixing phthalocyanine blue and phthalocyanine green pigments with a third pigment, an examination is carried out based on the approaches indicated below, for example.

(1) Improving weather resistance.

For the third component to be added to phthalocyanine blue and phthalocyanine green pigments having high weather resistance, select a pigment having high heat-and weather resistance. Regarding the heat resistance, a pigment having a high thermal decomposition temperature is preferred.

(2) Select a chromatic pigment which allows approximation of the hue to that of carbon black pigment (ΔE in the light color region of 1.5 or less).

Search for a pigment type having an absorption spectrum so as to provide a achromatic color in subtractive color mixing on a chromaticity diagram and so as to reduce the color difference compared with carbon black pigment.

(3) Based on the data obtained from (1) and (2) above, select a preferable third pigment type and determine the ratio of such a chromatic pigment at which the color difference ΔE in the light color region is 1.5 or less.

(4) If it is difficult to realize a desired performance using only the above-mentioned three types of pigments, further select and mix in a fourth pigment and, if necessary, further pigments in consideration of, e.g., the results of the studies of (1) and (2) above, and approximate the visible light absorption properties of the pigment composition to those of carbon black.

(5) Carry out a light resistance test on the resulting candidate formulation, and determine a preferable amount range for each chromatic pigment with respect to weather resistance.

The present invention was completed by going through the examination process of (1) to (5) above. It has been found that, when attempting to achieve high infrared radiation transmittance and good weather resistance and to obtain a hue which approximates that of carbon black, the total amount in parts by weight of phthalocyanine blue and phthalocyanine green pigments (Mb + Mg) is required to be in a specific relationship, and also that it is particularly preferable from the viewpoint of performance that the ratio of phthalocyanine green to phthalocyanine blue pigments (Mg/Mb) be within a specific range, thereby arriving at the present invention.

Examples of the phthalocyanine blue pigment used in the present invention include C.I. Pigment Blue 15:3, Pigment Blue 15:1, Pigment Blue 15:2, Pigment Blue 15:4 and Pigment Blue 15:6.

For the phthalocyanine green pigment used in the present invention, C.I. Pigment Green 7 and C.I. Pigment Green 36 can be used, for example.

According to the present invention, in a pigment composition comprising a phthalocyanine blue pigment as a first pigment, a phthalocyanine green pigment as a second pigment, and at least one other chromatic pigment, the amounts in parts by weight of the phthalocyanine blue pigment as Mb, the phthalocyanine green pigment as Mg, and the total of the at least one other chromatic pigment as Mn have to establish

Mb + Mg + Mn = 100, and 0.05 < Mg/Mb < 25, and

25 < Mg + 2.2Mb < 50, based on 100 parts by weight of the pigment composition.

If (Mg + 2.2Mb) is 20 parts by weight or less, then the proportion of the third and fourth chromatic pigments increases and due to this, it becomes difficult to obtain an absorption spectrum which approximates that of carbon black. Also in the case where (Mg + 2.2Mb) is 60 parts by weight or more, it becomes difficult to obtain an absorption spectrum (hue) which approximates that of carbon black (since it is difficult to adjust the absorption spectrum even by addition of third, fourth, or further pigments since coloring strength at a wavelength of 500 nm or longer attributable to the phthalocyanine backbone is excessively large).

According to the present invention, although phthalocyanine blue and phthalocyanine green are required to be present as essential pigments, such a requirement is not indispensable only in order to simply obtain a black coating. For example, if a red pigment is mixed into phthalocyanine green, black color can be obtained based on the complementary color relationship thereof, without adding a blue pigment. However, the present inventors have found, when an attempt is made to improve weather resistance under light color conditions, it is difficult to achieve it only by mixing these two components, and it is particularly preferable to add phthalocyanine blue for that purpose.

It is presumed that the reason for this is that, when a two component system of a green pigment and a red pigment is exposed to sunlight and the red pigment then fades, only the green pigment remains. This means that decomposition of even only a portion of the red pigment leads to remarkably conspicuous discoloration. In contrast, it is inferred that, when both phthalocyanine blue and phthalocyanine green are present, broad absorption of visible light occurs due to these two pigment components having different absorption spectra, and as a result of reduced chroma compared to green pigment alone, generation of color is suppressed even if the red pigment fades.

In order to achieve the object of the present invention, the amounts in parts by weight of the phthalocyanine blue pigment as Mb and the phthalocyanine green pigment as Mg establish:

$$0.05 < Mg/Mb < 25.$$

If Mg/Mb is 0.05 or less, the amount of the phthalocyanine green pigment is small and due to this, as previously described, the above-mentioned visible light absorption width decreases, and fading easily becomes visually conspicuous. In addition, if Mg/Mb is 0.05 or less, it is then necessary to add a third chromatic pigment such as a yellow pigment having absorption in the vicinity of 400 nm to 500 nm, but, in this case, since typical yellow pigments have poorer weather resistance in comparison with phthalocyanine green pigments, weather resistance of the heat-shielding coating may decrease.

The reason for having Mg/Mb of less than 25 is similar to that above regarding Mg/Mb of 0.05 or less. If the blue component is too much, the visible light absorption width becomes narrower, and fading may become visually conspicuous. As mentioned above, since phthalocyanine blue and phthalocyanine green pigments both have only a small light absorbance in the vicinity of 450 nm to 550 nm, it is difficult to express a hue which approximates that of carbon black pigment even by mixing these two pigments. Therefore, a third pigment and optionally, a fourth or further pigment, are mixed in.

Pigments which can be used as such a third, fourth or further pigment according to the present invention are preferably pigments which selectively absorb light of 400 nm to 550 nm, and show transmittance in the infrared wavelength region of 40 % or more. Both inorganic and organic chromatic pigments can be used, provided they satisfy the above-mentioned requirements, but preference is given to pigments having weather resistance comparable to phthalocyanine blue and green considering hue changes after being exposed.

Commercially available inorganic chromatic pigments include oxide-based pigments such as cobalt blue, hydroxide-based pigments such as yellow iron oxide or viridian, sulfide-based pigments such as zinc sulfide, lithopone, cadmium yellow, vermillion or cadmium red, chromate-based pigments such as chrome yellow, molybdate orange, zinc chromate or strontium chromate, silicate-based pigments such as ultramarine, and vanadium-based pigments such as bismuth vanadium yellow, vanadium tin yellow or vanadium zirconia yellow, as well as ferrocyanides (Prussian blue) or phosphates (manganese violet). Any inorganic chromatic pigments among the above can be used, provided they have the above-mentioned optical properties.

Inorganic chromatic pigments are suitable for use in baking coatings since they typically have better light resistance, heat resistance, hiding power and the like in comparison with organic pigments. However, they have low coloring strength and frequently contain harmful heavy metals such as chromium. In addition, they are also susceptible to acids and bases, and therefore may not be said to be always suitable chromatic pigments for outdoor applications subjected to strong stimulation by wind, rain and sunlight. Among these, vanadium-based pigments are particularly preferable as chromatic pigments for the present invention in terms of their high coloring strength, low toxicity and high weather resistance.

Examples of organic pigments include azo pigments, lake pigments, thioindigo pigments, anthraquinone pigments (such as anthranthrone pigments, diaminoanthraquinonyl pigments, indanthrone pigments, flavanthrone pigments or anthrapyrimidine pigments), perylene pigments, perinone pigments, diketopyrrolopyrrole pigments, dioxazine pigments, phthalocyanine pigments, quinophthalone pigments, quinacridone pigments, isoindoline pigments and isoindolinone pigments. Of these pigments, those having a reddish or yellowish hue and the like are suitably selected.

Anthraquinone pigments are preferable for use as a third pigment of the present invention. Among these, anthranthrone pigments are particularly preferable, examples thereof including C.I. Pigment Red 168, Pigment Orange 77 and Pigment Red 177, especial preference being given to C.I. Pigment Red 168 in terms of weather resistance.

If an anthraquinone pigment is used as the third pigment, the amounts in parts by weight of the phthalocyanine blue (Mb), phthalocyanine green (Mg) and third pigment (M3) based on 100 parts by weight of the black pigment composition preferably satisfy the relational expressions indicated below, respectively:

$$1 < Mb < 10,$$

$$25 < Mg < 45,$$

and

$$45 < M3 < 70.$$

Particular preference is given to the following ranges:

$$2 < Mb < 7,$$

$$30 < Mg < 40,$$

and

$$55 < M3 < 65.$$

If the amount of each pigment is equal to or less than the value of the above-mentioned relational expression, it is difficult to obtain a desired hue or weather resistance, and the same is also true if the amount of each pigment is equal to or greater than the value of the above-mentioned relational expression.

Pigments which can be used as a third pigment according to the present invention are preferably benzimidazolone pigments in terms of satisfying both requirements for hue and weather resistance. Of these pigments, C.I. Pigment Yellow 154, C.I. Pigment Yellow 214 and C.I. Pigment Orange 36 are particularly preferable since they have high weather resistance. If these benzimidazolone pigments are used, it is particularly preferable to add a red pigment, for example, a diketopyrrolopyrrole pigment, as a fourth pigment in order for the hue to be close to that of carbon black. In this case, the pigment composition is preferably in accordance with the following conditions:

$$5 < Mb < 20,$$

$$1 < Mg < 30,$$

and

$$55 < M34 < 85.$$

The following pigment composition is preferable when using C.I. Pigment Yellow 154 as a third pigment and C.I. Pigment Red 254 as a fourth pigment:

$$3 < Mb < 15,$$

$$15 < Mg < 30,$$

and

$$55 < M34 < 80,$$

and particularly preferably:

$$5 < Mb < 13,$$

$$18 < Mg < 27,$$

and

$$60 < M34 < 75.$$

If the amount of each pigment is equal to or less than the value of the above-mentioned relational expression, it is difficult to obtain a desired hue or weather resistance, and the same is also true if the amount of each pigment is equal to or greater than the value of the above-mentioned relational expression.

In addition to the above-mentioned organic pigments, an inorganic pigment can also be used as a third pigment according to the present invention. Since inorganic pigments usually have higher heat resistance in comparison with organic pigments, they are particularly preferable for use in coatings requiring heat resistance, such as baking coatings for metal plates.

Examples of inorganic chromatic pigments used in the present invention include C.I. Pigment Yellow 184 (bismuth vanadate pigment) and Pigment Yellow 42. Particular preference among these is given to C.I. Pigment Yellow 184, which has the chemical formula $4BiVO_4 \cdot 3Bi_2MoO_6$ and is particularly preferred when applying a heat-shielding layer onto an iron plate etc., by bake-coating because it has high heat resistance and weather resistance.

If an inorganic yellow pigment such as C.I. Pigment Yellow 184 is used as a third pigment, it is particularly preferable to add a red pigment, for example, a diketopyrrolopyrrole pigment such as C.I. Pigment Red 254 or a naphthol pigment such as C.I. Pigment Red 170 as a fourth pigment in order for the hue to be close to that of carbon black.

Based on 100 parts by weight of the black pigment composition, the composition of the phthalocyanine blue (Mb), the phthalocyanine green (Mg) and the total (M34) of an inorganic yellow pigment (M3) and a diketopyrrolopyrrole and/or naphthol pigment (M4) preferably satisfies the following relational expressions:

$$2 < Mb < 15,$$

$$10 < Mg < 30,$$

and

$$60 < M34 < 88,$$

and particularly preferably:

$$3 < Mb < 10,$$

$$15 < Mg < 25,$$

and

$$65 < M34 < 82.$$

It is not preferable that the lower or upper limit of each of the relational expressions be exceeded, because the color difference from carbon black then increases.

As was previously described, a white pigment can be added to the heat-shielding coating of the present invention in addition to chromatic pigments such as phthalocyanine blue and phthalocyanine green pigments. Since a coating, which has been preliminarily adjusted in respect to the brightness to be possessed by the applied coating, can be prepared by adding a white pigment to a coating which comprises the dark-colored, black pigment composition, the shading operation of other chromatic coatings can be simplified. Examples of such white pigments used include metal oxides such as rutile titanium dioxide, aluminum oxide and zinc oxide, but particular preference is given to titanium dioxide due to its high refractive index and high degree of whiteness.

The pigment composition according to the present invention can be obtained based on the above-mentioned guidelines and, for example, can be prepared according to the method indicated below. More specifically, the pigment composition according to the present invention can be obtained by uniformly mixing the aforementioned individual chromatic pigments, which have been dried and ground separately, in a predetermined weight ratio based on the above-mentioned guidelines so as to be close to the black color of carbon black. However, in order to further improve the color separation resistance and color development of the ultimately obtained colored resin, it is preferable to mix aqueous slurries of at least two chromatic pigments, followed by stirring, filtering, washing, and then drying and grinding.

In the above-mentioned preparation method, a surfactant can be used in combination when preparing an aqueous dispersion of a chromatic pigment. Examples of surfactants include anionic surfactants, nonionic surfactants and cationic surfactants.

Examples of anionic surfactants include sodium dodecyl benzene sulfonate, sodium dialkyl sulfosuccinate and sodium polyoxyethylene alkyl ether sulfate.

Examples of nonionic surfactants include polyoxyethylene lauryl ethers, polyoxyethylene nonyl phenyl ethers and sorbitan fatty acid esters.

Examples of cationic surfactants include stearyl trimethyl ammonium chloride and distearyl dimethyl ammonium chloride.

In the above-mentioned preparation method, the amount of surfactant used in combination is normally 10 parts by weight or less and preferably within the range of 3 parts by weight to 10 parts by weight, relative to 100 parts by weight of the chromatic pigment. An amount of surfactant used of greater than 10 parts by weight is not preferable, because, in this case, there is a tendency that undesirable phenomena such as increased formation of blisters when a coating film is formed may occur.

A colored resin dispersion is obtained by dispersing the pigment composition of the present invention in a dispersion medium using a known disperser. As such a dispersion medium, use is made of a mixture of a binder resin and a solvent. Any resin can be used, and examples of resins used include alkyd resins, acrylic resins, silicone resins, acrylic-silicone resins, urethane resins, polyester resins, amide resins, melamine resins, ether resins, fluororesins, polyvinyl chloride, poly(meth)acrylates, polystyrenes, ABS resins, AS resins, polyolefins such as polyethylene or polypropylene, polyamides, polyacetals, polycarbonates, polyesters such as PET or PBT, and synthetic resins such as modified polyphenylene ethers. Among these, acrylic-silicone resins and silicone resin are particularly preferable in terms of weather resistance.

Examples of solvents used as pigment dispersion media include water, aromatic hydrocarbon solvents such as toluene and xylene, aliphatic hydrocarbon solvents such as mineral spirits, alcohol solvents such as methanol and ethanol, ester solvents such as ethyl acetate, ketone solvents such as methyl ethyl ketone, and ether solvents such as ethylene glycol.

The proportion of the pigment composition of the present invention in a dispersion obtained by dispersing the pigment composition is normally preferably 90 % by weight or less and particularly preferably within the range of 0.01 % by weight to 50 % by weight. The remainder consists of dispersion medium, additives and the like.

In addition, various types of assistants and stabilizers may also be used if necessary, examples of which include dispersion wetting agents, anti-skinning agents, ultraviolet absorbers, and antioxidants.

Dispersion conditions for dispersing the pigment composition in the aforementioned dispersion medium vary depending on the dispersion medium and disperser, and the dispersing temperature may generally range from room temperature to 240 °C and preferably from room temperature to 150 °C, and the dispersing time may be generally 120 hours or shorter and preferably 5 hours or shorter.

Any disperser can be used to disperse the pigment composition of the present invention in the aforementioned dispersion media, and examples thereof include known dispersers such as a disper mixers, homomixers, bead mills, ball mills, two-roll mills, three-roll mills or pressure kneaders.

If necessary, such a dispersion of the pigment composition of the present invention is mixed with other additives and the like to prepare a final coating. The coating can be used in a bilayer system by first forming an underlayer from a coating comprising, as a starting material, a pigment having high infrared radiation reflectance, and then applying a top layer thereon from a coating having high infrared radiation transmission, which is made of a product according to the present invention, either directly in the form of a dark-colored coating or after the coating is color-lightened by mixing it with a coating having a different hue. If the coating is used after being color-lightened by mixing it with titanium oxide or the like having high infrared radiation reflectance, it is possible to use the coating in a monolayer system, in addition to the multilayer system as mentioned above.

The heat-shielding black coating according to the present invention is preferable in terms of improving the efficiency of a shading operation in the case where it is mixed with a coating having a different hue for shading the latter. Furthermore, it can also be preferably used for applications in which it is applied with the same color tone to a substrate without mixing. If shading is carried out, a dark-colored black coating prepared using the pigment composition of the present invention and a coating having a different hue, such as a white pigment, are mixed at such a predetermined ratio that a desired color tone is achieved, and then applied.

A shading method which uses a computer is also useful for obtaining a desired color tone using the heat-shielding black coating of the present invention. It is a system to determine a mixing ratio of coatings for achieving a desired color tone (target) by preliminarily registering the coordinates in CIE color space of the heat-shielding black coating of the present invention in a computer, and carrying out computer calculations in combination with the color coordinate data of other primary color coatings and the like, and enables accurate shading without requiring skilled work. Since the black coating prepared using the pigment composition of the present invention has a hue close to that of conventional carbon black coatings under both dark and light color conditions, an effect thereof is that it makes it possible to design a shading operation system in a simpler manner because shading is possible without color corrections based on complicated computer calculations.

The heat-shielding black coating obtained according to the above-mentioned method can be applied on a desired substrate after being mixed with other chromatic coatings such as red or blue, or a white coating, and the like. Substrates made of various materials are used depending on the purpose in each case, regardless whether they are reflective or non-reflective, including roofs such as zinc, slate and tile roofs, mortar walls, steel tanks and asphalt streets. In addition, any conventional undercoatings or application methods can be suitably used for coating operations.

The present invention will be further described based on examples. In the examples, the terms "parts" and "%" represent "parts by weight" and "% by weight", respectively. Furthermore, the resins used are alkyd resins Vialkyd AC 451n/70SNB and Vialkyd AC 451n/60X manufactured by Cytec Corp., and the hardener was a melamine resin Maprenal MF600/55BIB manufactured by Ineos Corp. The pigments and their trade names used in the examples and comparative examples are shown in Table 2.

[Table 2]

| Pigment Abbreviation | C.I. No. | Generic Name | Manufacturer | Trade Name |
|---|---|---|---|---|
| PB15:1 | C.I. Pigment Blue 15:1 | Phthalocyanine blue | Clariant | Hostaperm Blue A4R |
| PB15:6 | C.I. Pigment Blue 15:6 | Phthalocyanine blue | BASF | Heliogen Blue L6700F |
| PB15:1 | C.I. Pigment Blue 15:1 | Phthalocyanine blue | Clariant | Hostaperm Blue 729D |
| PG7 | C.I. Pigment Green 7 | Phthalocyanine green | Clariant | Hostaperm Green GNX |
| PG36 | C.I. Pigment Green 36 | Phthalocyanine green | Clariant | Hostaperm Green 8G |
| PR168 | C.I. Pigment Red 168 | Anthranthrone pigment | Clariant | Hostaperm Red G0 |
| PR254 | C.I. Pigment Red 254 | Diketopyrrolopyrrofe pigment | Clariant | Hostaperm Red D3G70 |
| PY154 | C.I. Pigment Yellow 154 | Benzimidazolone pigment | Clariant | Hostaperm Yellow H3G |
| PY214 | C.I. Pigment Yellow 214 | Benzimidazolone pigment | Clariant | Hostaperm Yellow H9G |
| PO36 | C.I. Pigment Orange 36 | Benzimidazolone pigment | Clariant | Hostaperm Orange HL70 |
| PO73 | C.I. Pigment Orange 73 | Diketopyrrolopyrrole pigment | BASF | Irgazin Orange RA |
| PR264 | C.I. Pigment Red 264 | Diketopyrrolopyrrole pigment | BASF | Irgazin DPP Rubine FTX |
| PR188 | C.I. Pigment Red 188 | Naphthol pigment | Clariant | Novoperm Red HF3S70 |
| PR170 | C.I. Pigment Red 170 | Naphthol pigment | Clariant | Novoperm Red F5RK |
| PY184 | C.I. Pigment Yellow 184 | Bismuth vanadate pigment | Clariant | Hostaperm Oxide Yellow BV01 |
| PY184 | C.I. Pigment Yellow 184 | Bismuth vanadate pigment | BASF | Irgacolor Yellow 3RLM |

Samples obtained in the following examples and comparative examples were evaluated according to the methods indicated below.

1) Measurement of Color Difference

Each test sheet or plate was prepared by applying a pigment composition to a black/white hiding paper or a metal plate, and the test sheet or plate was subjected to measurement using a spectrophotometer equipped with an original program PQC in accordance with DIN5033-7 and ISO7724-2.

2) Evaluation of Weather Resistance

Each test plate was prepared by applying a pigment composition to a metal plate, and the coated metal plate was then subjected to an accelerated exposure test using a weatherometer (Model Ci4000 Weatherometer, Atlas Electric Devices Co.). Color difference was determined by measuring the metal plate before and after the accelerated exposure test. Testing was carried out under exposure conditions in accordance with ISO4892-2 using a xenon lamp.

3) Measurement of Infrared Radiation Reflectance

Each test sheet was prepared by applying a sample of a heat-shielding coating according to one of the following example or comparative example, and subjected to measurement using a spectrophotometer (Model 750 Spectrophotometer, Lambda Corp.). (Evaluation was carried out by measuring the reflectance of the measurement sites, i.e., the coating applied to the white part of the white/black hiding paper, and also the coating applied to the black part.)

Example 1

The following three pigments were mixed in a weight ratio as indicated below to obtain Pigment Composition 1A.

(Pigment Composition 1A)

| | |
|---|---|
| C.I. Pigment Blue 15:1 | 3.3 parts by weight (= Mb) |
| C.I. Pigment Green 7 | 35.8 parts by weight (= Mg) |
| C.I. Pigment Red 168 | 60.9 parts by weight (= M3) |

In this case, $Mg + 2.2Mb = 43.06$ and $Mg/Mb = 10.8$.

4.0 parts by weight of Pigment Composition 1A were mixed with 30.0 parts by weight of a dispersing varnish P1 to prepare a mill base, which was then dispersed in a disperser (Model DAS200K, Lau GmbH) for 60 minutes to obtain Pigment Dispersion 1 B.

To 17 parts by weight of the resultant dispersion 1 B were added 83 parts by weight of a diluting varnish P2 so that the pigment content in the coating was 2.0 %, followed by mixing in a disperser (Model DAS200K) for 5 minutes to obtain Coating 1C.

The composition of the dispersing varnish P1 consisted of 50 % by weight of Vialkyd AC 451n/70SNB and 50 % by weight of solvent naphtha, where the alkyd resin content was 35 % by weight. The composition of the diluting varnish P2 consisted of 26.4 % by weight of Vialkyd AC 451n/70SNB, 29.4 % by weight of Vialkyd AC 451n/60X, 35.8 % by weight of Maprenal MF600/55BIB, 6.2 % by weight of a high boiling solvent mixture, and 2.2 % by weight of solvent naphtha, where the alkyd resin content was 55.8 % by weight.

(Preparation of White Coating)

1.0 part by weight of $TiO_2$ was mixed with 33.0 parts by weight of a dispersing varnish P1 to prepare a mill base, which was then dispersed in a disperser (Model DAS200K, O-Well Corp.) for 60 minutes to obtain a white pigment dispersion 1W. To this white pigment dispersion 1W were added 66 parts by weight of a diluting varnish P2 so that the pigment content in the coating was 1.0 %, followed by mixing in a disperser (Model DAS200K) for 5 minutes to obtain a white coating.

(Heat-Shielding Coated Sample)

1) Light-Colored Coated Sample 1E

2.8 parts by weight of Coating 1C were mixed with 23.0 parts by weight of the white coating prepared according to the method described above (TiO$_2$ concentration: 1 %) to obtain Heat-Shielding Coating 1 D. Heat-Shielding Coating 1 D was then used to color a metal plate (iron) with a bar coater (No. 8), and after allowing it to stand for 20 minutes at room temperature while keeping the plate horizontal, the coated metal plate was heated and dried at 140 °C for 20 minutes to obtain Light-Colored Coated Sample 1 E. The Hunter whiteness of Sample 1 E was 23.8.

2) Dark-Colored Coated Sample 1 F

Dark-Colored Coated Sample 1 F having Hunter whiteness of 1.1 was prepared according to the same method as that used to prepare the light-colored sample with the exception of using the above-mentioned Coating 1C.

Standard Coated Samples S1 (light color) and S2 (dark color) for evaluation of hue and weather resistance were prepared as follows: Light-Colored Standard Coated Sample S1 was obtained by preparing a black coating using the same procedures as described above with the exception of using 1.0 part by weight of carbon black pigment (C.I. Pigment Black 7, FW-200, Degussa Corp.) instead of the pigment composition used in Example 1, followed by the same procedure as in the above "Heat-Shielding Coated Sample" with the exception of using 1.0 part by weight of the above-mentioned black coating and 50.0 parts by weight of the white coating prepared according to the method described above (TiO$_2$ concentration: 1%). Moreover, Dark-Colored Standard Coated Sample S2 was prepared analogously to the above dark-colored coated sample. The L*, a* and b* values of the resulting Heat-Shielding Coated Samples 1 E and 1 F and the standard coated samples were measured and, from the results therefrom, the color differences between the heat-shielding coated samples and the standard coated samples were calculated. The calculated color differences are shown in Table 3 below. The infrared radiation transmittance of Samples 1 E and 1 F was 75%, which was much higher compared to Standard Samples S1 and S2.

Comparative Example 1

The following three pigments were mixed in a weight ratio as indicated below to obtain Comparative Pigment Composition 1 a.

(Comparative Pigment Composition 1 a)

| | |
|---|---|
| C.I. Pigment Blue 15:1 | 25 parts by weight (= Mb) |
| C.I. Pigment Green 7 | 25 parts by weight (= Mg) |
| C.I. Pigment Red 168 | 50 parts by weight (= M3) |

In this case, Mg + 2.2Mb = 80 and Mg/Mb = 1.0.

With the exception of using Comparative Pigment Composition 1a, Comparative Coatings 1c and 1d were obtained analogously to Example 1, and Comparative Coated Samples 1e and 1f were prepared therefrom, followed by evaluation thereof in the same method as in Example 1. The results are shown in Table 3.

In Example 1, in which Mg + 2.2Mb was 43.06, the color difference ΔE compared to the unexposed standard sample was 0.8 and thus extremely favorable. In contrast thereto, the color difference ΔE of Comparative Example 1, in which Mg + 2.2Mb was 80, was 12.2 and thus inferior. In addition, good performance was shown regarding the infrared radiation reflectance prior to exposure. The determination of color difference ΔE gave a good result even after a weather resistance test was carried out after exposure to a xenon lamp for 3000 hours. In Table 3, regarding the L* value of the CIE color system of the dark-colored coated sample, the difference (ΔL*) compared to the dark-colored standard coated sample is shown. Example 1 achieved values for both ΔE and ΔL*, which approximated those of the carbon black standard sample. In contrast, Comparative Example 1, despite having a favorable value of ΔL* for the dark-colored sample, showed a large value for ΔE.

It is thus clear that a very large deviation in hue from the standard sample occurred as a result of the coating being color-lightened.

[Table 3]

| | Example 1 | Comp. Ex. 1 | Standard Sample |
|---|---|---|---|
| Mb | 3.30 | 25.0 | (carbon black) |
| Mg | 35.80 | 25.0 | -- |
| M3 | 60.90 | 50.0 | -- |
| Mg + 2.2Mb | 43.06 | 80 | -- |
| Mg/Mb | 10.8 | 1.0 | -- |
| Hunter whiteness | 23.8 | -- | |
| Color difference ($\Delta E$) from standard sample (light color, before weather resistance test) | 0.80 | 12.20 | -- |
| L* difference ($\Delta L^*$) from standard sample (dark color, before exposure) | 1.91 | 0.76 | |
| Infrared reflectance (%) (before exposure) | 75.0 | 70 or more | 5 |
| Color difference ($\Delta E$) before and after weather resistance test (exposure time: 3000 hours) | 1.73 | -- | 0.38 |
| --: Not measured | | | |

Example 2

The following four chromatic pigments were mixed in a weight ratio as indicated below to obtain Pigment Composition 2A.

(Pigment Composition 2A)

| | |
|---|---|
| C.I. Pigment Blue 15:1 | 7.7 parts by weight (= Mb) |
| C.I. Pigment Green 7 | 23.1 parts by weight (= Mg) |
| C.I. Pigment Yellow 154 | 30.8 parts by weight (= M3) |
| C.I. Pigment Red 254 | 38.4 parts by weight (= M4) |

In this case, Mg + 2.2Mb = 40.04 and Mg/Mb = 3.0.

Heat-Shielding Coating 2C was prepared analogously to Example 1 with the exception of using said Pigment Composition 2A.

In addition, 1.3 parts by weight of Coating 2C were mixed with 17.0 parts by weight of a white coating ($TiO_2$ concentration: 1 %) obtained in accordance with the method described above (Preparation of White Coating) to obtain Heat-Shielding Coating 2D.

Light-Colored and dark-Colored Coated Samples 2E and 2F were prepared as in Example 1, and these samples were evaluated by comparing them with Standard Samples S1 and S2. The results are shown in Table 4.

Comparative Examples 2 to 4

Comparative Coatings 2c, 2d, 3c, 3d, 4c and 4d were prepared analogously to Example 1 using the same combination of chromatic pigments of Example 2, with the exception of only changing the pigment composition ratios thereof to those shown in Table 4. These comparative pigments were then used to prepare Comparative Coated Samples 2e, 2f, 3e, 3f, 4e and 4f.

These Comparative Samples 2e, 2f, 3e, 3f, 4e and 4f were evaluated as in Example 1. The results are shown in Table 4.

[Table 4]

|  | Example 2 | Comp. Ex. 2 | Comp. Ex. 3 | Comp. Ex. 4 |
|---|---|---|---|---|
| Mb | 7.70 | 25.00 | 22 | 23 |
| Mg | 23.10 | 25.00 | 32.2 | 12.1 |
| M34 | 69.20 | 50.00 | 45.8 | 64.9 |
| Mg + 2.2Mb | 40.04 | 80 | 80.6 | 62.7 |
| Mg/Mb | 3.0 | 1.00 | 1.46 | 0.53 |
| Color difference (ΔE) from standard sample (light color, before weather resistance test) | 0.60 | 13.00 | 15.3 | 8.6 |
| L* difference (ΔE*) from standard sample (dark color, before exposure) | 1.78 | 1.18 | -- | -- |
| Infrared reflectance (%) (before exposure) | 70 or more | 70 or more | 70 or more | 70 or more |
| --: Not measured | | | | |

Example 3

The following four chromatic pigments were mixed in a weight ratio as indicated below to obtain Pigment Composition 3A.

(Pigment Composition 3A)

| C.I. Pigment Blue 15:1 | 5.0 parts by weight (= Mb) |
|---|---|
| C.I. Pigment Green 7 | 20.0 parts by weight (= Mg) |
| C.I. Pigment Yellow 184 | 50.0 parts by weight (= M3) |
| C.I. Pigment Red 254 | 25.0 parts by weight (= M4) |

In this case, Mg + 2.2Mb = 31 and Mg/Mb = 4.0.

Heat-Shielding Coating 3C was prepared analogous to Example 1 with the exception of using said Pigment Composition 3A, and Dark-Colored Coated Sample 3F was prepared from this pigment composition.

In addition, 2.0 parts by weight of Coating 3C were mixed with 17.0 parts by weight of a white coating (TiO$_2$ concentration: 1 %) to obtain Heat-Shielding Coating 3D. Analogously to Example 1, light-Colored Coated Sample 3E was prepared and then evaluated. The results are shown in Table 5.

Comparative Example 5

Comparative coatings 5c and 5d were prepared analogously to Example 1 using the same combination of chromatic pigments of Example 3 with the exception of only changing the pigment composition ratios to those shown in Table 5, and these comparative coatings were then used to prepare Comparative Coated Samples 5e and 5f.

These Comparative Samples 5e and 5f were evaluated as in Example 1. The results are shown in Table 5.

[Table 5]

|  | Example 3 | Comp. Ex. 5 |
|---|---|---|
| Mb | 5.0 | 25.00 |
| Mg | 20.0 | 25.00 |
| M34 | 75.0 | 50.00 |
| Mg + 2.2Mb | 31 | 80 |

EP 2 914 667 B1

(continued)

|  | Example 3 | Comp. Ex. 5 |
|---|---|---|
| Mg/Mb | 4.0 | 1.00 |
| Color difference (ΔE) from standard sample (light color, before weather resistance test) | 1.0 | 14.5 |
| L* difference (ΔL*) from standard sample (dark color, before exposure) | 1.68 | -- |
| Infrared reflectance (%) (before exposure) | 70 or more | 70 or more |
| - : Not measured | | |

Examples 4 to 20

Light-Colored Coated Samples 4E to 20E were prepared analogously to Example 1 with the exception of using the combinations of chromatic pigments and pigment composition ratios shown in Table 6, and these samples were then evaluated as in Example 1. The results are shown in Table 6.

[Table 6]

| Ex. | Blue pigment | Green pigm. | Third pigment | Fourth pigm. | Blue pigment | Green pigm. | Third pigment | Fourth pigm. | Mb | Mg | M3 | M4 | EM | Mg+ 2.2 Mb | Mg/ Mb | ΔE |
|---|---|---|---|---|---|---|---|---|---|---|---|---|---|---|---|---|
| 4 | 729D | 8G | G0 | -- | PB15:1 | PG36 | PR168 | -- | 5.1 | 34.3 | 60.6 | -- | 100.0 | 45.52 | 6.7 | 0.85 |
| 5 | L-6700F | 8G | G0 | -- | PB15:6 | PG36 | PR168 | -- | 4.5 | 36.6 | 58.9 | -- | 100.0 | 46.5 | 8.2 | 0.89 |
| 6 | A4R | 8G | G0 | -- | PB15:1 | PG36 | PR168 | -- | 3.9 | 36.5 | 59.6 | -- | 100.0 | 45.08 | 9.4 | 0.85 |
| 7 | 729D | 8G | HL70 | FTX | PB15:1 | PG36 | PO36 | PR264 | 13.4 | 15.2 | 12.3 | 59.1 | 100.0 | 44.68 | 1.1 | 0.0 |
| 8 | 729D | GNX | HL70 | FTX | PB15:1 | PG7 | PO36 | PR264 | 12.5 | 10.7 | 11.7 | 65.1 | 100.0 | 38.2 | 0.9 | 0.0 |
| 9 | A4R | 8G | HL70 | FTX | PB15:1 | PG7 | PO36 | PR264 | 10.9 | 18.4 | 10.6 | 60.1 | 100.0 | 42.38 | 1.7 | 0.0 |
| 10 | A4R | GNX | HL70 | FTX | PB15:1 | PG7 | PO36 | PR264 | 9.9 | 12.9 | 10.1 | 67.1 | 100.0 | 34.68 | 1.3 | 0.0 |
| 11 | A4R | 8G | HL70 | RA | PB15:1 | PG7 | PO36 | PO73 | 15.9 | 2.3 | 14.7 | 67.1 | 100.0 | 37.28 | 0.1 | 0.1 |
| 12 | A4R | GNX | HL70 | RA | PB15:1 | PG7 | PO36 | PO73 | 15.8 | 1.6 | 14.5 | 68.1 | 100.0 | 36.36 | 0.1 | 0.1 |
| 13 | A4R | 8G | H9G | RA | PB15:1 | PG36 | PY214 | PO73 | 14.9 | 4.4 | 64.8 | 15.9 | 100.0 | 37.18 | 0.3 | 0.1 |
| 14 | A4R | GNX | H9G | RA | PB15:1 | PG7 | PY214 | PO73 | 14.5 | 3.4 | 65.8 | 16.3 | 100.0 | 35.3 | 0.2 | 0.1 |
| 15 | 729D | GNX | H9G | RA | PB15:1 | PG7 | PY214 | -- | 3.3 | 25.6 | 71.1 | -- | 100.0 | 32.86 | 7.6 | 1.4 |
| 16 | 729D | 8G | H9G | RA | PB15:1 | PG36 | PY214 | -- | 8.4 | 28.0 | 63.6 | -- | 100.0 | 46.48 | 3.3 | 1.2 |
| 17 | 729D | GNX | HL70 | RA | PB15:1 | PG7 | PY214 | -- | 3.3 | 25.6 | 71.1 | -- | 100.0 | 32.86 | 7.8 | 1.4 |
| 18 | A4R | GNX | H3G | F5RK | PB15:1 | PG7 | PY154 | PR170 | 6.7 | 26.7 | 33.3 | 33.3 | 100.0 | 41.44 | 4.0 | 0.8 |
| 19 | A4R | GNX | BV01 | F5RK | PB15:1 | PG7 | PY184 | PR170 | 3.8 | 19.2 | 53.8 | 23.2 | 100.0 | 27.56 | 5.1 | 1.1 |
| 20 | A4R | GNX | HF3S70 | -- | PB15:1 | PG7 | PR188 | -- | 1.8 | 36.4 | 61.8 | -- | 100.0 | 40.36 | 20.2 | 1.2 |

Comparative Examples 6 to 19

Light-Colored Coated Samples 6e to 19e were prepared analogously to Example 1 with the exception of using the combinations of chromatic pigments and pigment composition ratios shown in Table 7, and these samples were then evaluated as in Example 1. The results are shown in Table 7.

[Table 7]

| Comp. Ex. | Blue pigm. | Green pigm. | Third pigm. | Fourth pigm. | Blue pigm. | Green pigm. | Third pigm. | Fourth pigm. | Mb | Mg | M3 | M4 | EM | Mg+ 2.2 Mb | Mg/ Mb | ΔE |
|---|---|---|---|---|---|---|---|---|---|---|---|---|---|---|---|---|
| 6 | A4R | GNX | HF3S7 0 | -- | PB15:1 | PG7 | PR188 | -- | 16.7 | 33.3 | 50 | -- | 100 | 70.04 | 2.0 | 11.0 |
| 7 | A4R | GNX | HL70 | -- | PB15:1 | PG7 | PO36 | PO36 | 20 | 40 | 40 | -- | 100 | 84 | 2.0 | 14.1 |
| 8 | A4R | GNX | H3G | F5RK70 | PB15:1 | PG7 | PY154 | PR170 | 25 | 25 | 25 | 25 | 100 | 80 | 1.0 | 14.9 |
| 9 | A4R | GNX | BV01 | F5RK70 | PB15:1 | PG7 | PY184 | PR170 | 25 | 25 | 25 | 25 | 100 | 80 | 1.0 | 16.0 |
| 10 | A4R | GNX | HL70 | -- | PB15:1 | PG7 | PO36 | -- | 40 | 40 | 20 | -- | 100 | 128 | 1.0 | 22.7 |
| 11 | A4R | GNX | HL70 | -- | PB15:1 | PG7 | PO36 | -- | 50 | 33.3 | 16.7 | -- | 100 | 143.3 | 0.7 | 24.5 |
| 12 | A4R | GNX | HL70 | -- | PB15:1 | PG7 | PO36 | -- | 57.1 | 28.6 | 14.3 | -- | 100 | 154.22 | 0.5 | 25.7 |
| 13 | A4R | GNX | HL70 | -- | PB15:1 | PG7 | PO36 | -- | 62.5 | 25 | 12.5 | -- | 100 | 162.5 | 0.4 | 26.7 |
| 14 | A4R | GNX | HL70 | -- | PB15:1 | PG7 | PO36 | -- | 66.7 | 22.2 | 11.1 | -- | 100 | 168.94 | 0.3 | 27.5 |
| 15 | A4R | GNX | G0 | -- | PB15:1 | PG7 | PR168 | -- | 25 | 25 | 50 | -- | 100 | 80 | 1 | 12.2 |
| 16 | A4R | GNX | H3G | D3G70 | PB15:1 | PG7 | PY154 | PR254 | 25 | 25 | 25 | 25 | 100 | 80 | 1 | 13 |
| 17 | A4R | GNX | H3G | D3G70 | PB15:1 | PG7 | PY154 | PR254 | 22.0 | 32.2 | 25.4 | 20.4 | 100 | 80.6 | 1.5 | 15.3 |
| 18 | A4R | GNX | H3G | D3G70 | PB15:1 | PG7 | PY154 | PR254 | 23.0 | 12.1 | 30.9 | 34 | 100 | 62.7 | 0.5 | 8.6 |
| 19 | A4R | GNX | BV01 | D3G70 | PB15:1 | PG7 | PY184 | PR254 | 25 | 25 | 25 | 25 | 100 | 80 | 1.0 | 14.5 |

EP 2 914 667 B1

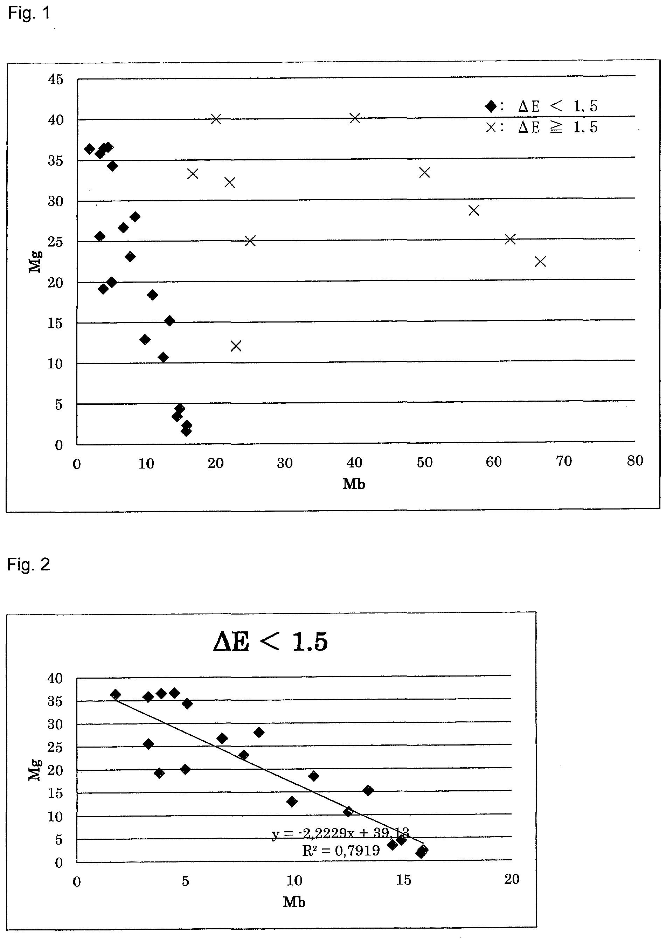

The evaluation results obtained from the above-mentioned examples and comparative examples are summarized in FIG. 1. In FIG. 1, the amount in parts by weight of the phthalocyanine blue pigment (Mb) is plotted on the horizontal axis, and the amount in parts by weight of the phthalocyanine green pigment (Mg) is plotted on the vertical axis. The black diamonds (♦) indicate that data of the examples in which $\Delta E < 1.5$, and the crosses (×) indicate the data of the comparative examples in which $\Delta E \geq 1.5$. When an approximation curve was determined from the data in which $\Delta E < 1.5$ using the least-squares method, R was approximately 0.8 and the formula y = -2.2x + 39.13 was derived (FIG. 2). The correlation of Mb, Mg, Mg + 2.2Mb and $\Delta E$ determined from this formula are summarized in Table 8. In the examples, the minimum value of Mg + 2.2Mb was 27.56 (Example 19), while the maximum value was 46.48 (Example 16). On the other hand, in the comparative examples, the minimum value was 62.7 (Comparative Examples 4 and 18). It was determined therefrom that favorable performance of a color difference $\Delta E$ of < 1.5 can be expected to be achieved in pigment compositions where 20 < Mg + 2.2Mb <60 and preferably 25 < Mg + 2.2Mb < 50.

[Table 8]

| Ex. | Mb | Mg | Mg + 2.2Mb | $\Delta E$ |
|---|---|---|---|---|
| 1 | 3.3 | 35.8 | 43.06 | 0.8 |
| 2 | 7.7 | 23.1 | 40.04 | 0.6 |
| 3 | 5 | 20 | 31 | 1 |
| 4 | 5.1 | 34.3 | 45.52 | 0.85 |
| 5 | 4.5 | 36.6 | 46.5 | 0.89 |
| 6 | 3.9 | 36.5 | 45.08 | 0.85 |
| 7 | 13.4 | 15.2 | 44.68 | 0 |
| 8 | 12.5 | 10.7 | 38.2 | 0 |
| 9 | 10.9 | 18.4 | 42.38 | 0 |
| 10 | 9.9 | 12.9 | 34.68 | 0 |
| 11 | 15.9 | 2.3 | 37.28 | 0.1 |
| 12 | 15.8 | 1.6 | 36.36 | 0.1 |
| 13 | 14.9 | 4.4 | 37.18 | 0.1 |
| 14 | 14.5 | 3.4 | 35.3 | 0.1 |
| 15 | 3.3 | 25.6 | 32.86 | 1.4 |
| 16 | 8.4 | 28 | 46.48 | 1.2 |
| 17 | 3.3 | 25.6 | 32.86 | 1.4 |
| 18 | 6.7 | 26.7 | 41.44 | 0.8 |
| 19 | 3.8 | 19.2 | 27.56 | 1.1 |
| 20 | 1.8 | 36.4 | 40.36 | 1.2 |
| Comp. Ex. | Mb | Mg | Mg + 2.2Mb | $\Delta E$ |
| 1 | 25 | 25 | 80 | 12.2 |
| 2 | 25 | 25 | 80 | 13 |
| 3 | 22 | 32.2 | 80.6 | 15.3 |
| 4 | 23 | 12.1 | 62.7 | 8.6 |
| 5 | 25 | 25 | 80 | 14.5 |
| 6 | 16.7 | 33.3 | 70.04 | 11 |
| 7 | 20 | 40 | 84 | 14.1 |
| 8 | 25 | 25 | 80 | 14.9 |
| 9 | 25 | 25 | 80 | 16 |

(continued)

| Comp. Ex. | Mb | Mg | Mg + 2.2Mb | ∆E |
|---|---|---|---|---|
| 10 | 40 | 40 | 128 | 22.7 |
| 11 | 50 | 33.3 | 143.3 | 24.5 |
| 12 | 57.1 | 28.6 | 154.22 | 25.7 |
| 13 | 62.5 | 25 | 162.5 | 26.7 |
| 14 | 66.7 | 22.2 | 168.94 | 27.5 |
| 15 | 25 | 25 | 80 | 12.2 |
| 16 | 25 | 25 | 80 | 13 |
| 17 | 22 | 32.2 | 80.6 | 15.3 |
| 18 | 23 | 12.1 | 62.7 | 8.6 |
| 19 | 25 | 25 | 80 | 14.5 |

As can be understood from the above-mentioned examples, it has been found that the black pigment composition for heat-shielding coatings according to the present invention and a coating using that pigment composition have advantageous effects in that it is possible to make a coated plate having a black hue close to that of carbon black, color matching such as shading is easy when said coating is mixed with a coating of a different color, they provide high infrared radiation reflectance and high weather resistance, and further they also provide good so-called heat shielding.

**Claims**

1. A black pigment composition for heat-shielding coatings, comprising a phthalocyanine blue pigment as a first pigment, a phthalocyanine green pigment as a second pigment, and at least one other chromatic pigment, wherein, regarding the amounts in parts by weight of the phthalocyanine blue pigment as Mb, the phthalocyanine green pigment as Mg, and the total of the at least one other chromatic pigment as Mn, wherein
Mb + Mg + Mn = 100, and wherein 0.05 < Mg/Mb < 25, and
25 < Mg + 2.2Mb < 50, are established, based on 100 parts by weight of the total pigment composition.

2. A black pigment composition for heat-shielding coatings as claimed in claim 1, wherein at least one pigment selected from the group consisting of C.I. Pigment Blue 15:3, Pigment Blue 15:1, Pigment Blue 15:2, Pigment Blue 15:4 and Pigment Blue 15:6 is used as the phthalocyanine blue pigment.

3. A black pigment composition for heat-shielding coatings as claimed in claim 1 or 2, wherein C.I. Pigment Green 7 and/or C.I. Pigment Green 36 are/is used as the phthalocyanine green pigment.

4. A black pigment composition for heat-shielding coatings as claimed in any one of claims 1 to 3, wherein the composition comprises an inorganic chromatic pigment and/or an organic chromatic pigment as the at least one other chromatic pigment.

5. A black pigment composition for heat-shielding coatings as claimed in claim 4, wherein the inorganic chromatic pigment is at least one selected from the group consisting of cobalt blue, yellow iron oxide, viridian, zinc sulfide, lithopone, cadmium yellow, vermillion, cadmium red, chrome yellow, molybdate orange, zinc chromate, strontium chromate, ultramarine, bismuth vanadium yellow, vanadium tin yellow, vanadium zirconia yellow, ferrocyanides (Prussian blue) and phosphates (manganese violet).

6. A black pigment composition for heat-shielding coatings as claimed in claim 4, wherein the organic chromatic pigment is at least one selected from the group consisting of azo pigments, lake pigments, thioindigo pigments, anthraquinone pigments, perylene pigments, perinone pigments, diketopyrrolopyrrole pigments, dioxazine pigments, phthalocyanine pigments, quinophthalone pigments, quinacridone pigments, isoindoline pigments and isoindolinone pigments.

7. A black pigment composition for heat-shielding coatings as claimed in any of claims 1 to 6, wherein the composition consists of a phthalocyanine blue pigment as the first pigment, a phthalocyanine green pigment as the second pigment, and a third pigment as the at least one other chromatic pigment.

8. A black pigment composition for heat-shielding coatings as claimed in claim 7, wherein the composition comprises an inorganic pigment as the third chromatic pigment.

9. A black pigment composition for heat-shielding coatings as claimed in claim 7, wherein the composition comprises at least one chromatic pigment selected from the group consisting of an anthraquinone pigment, a benzimidazolone pigment and a diketopyrrolopyrrole pigment as the third chromatic pigment.

10. A black pigment composition for heat-shielding coatings as claimed in claim 7, wherein the composition comprises an anthraquinone pigment C.I. Pigment Red 168 as the third chromatic pigment.

11. A black pigment composition for heat-shielding coatings as claimed in claim 10, wherein, for the amounts in parts by weight of the phthalocyanine blue pigment as Mb, the phthalocyanine green pigment as Mg, and the third chromatic pigment as M3,

$$1 < Mb < 10,$$

$$25 < Mg < 45,$$

and

$$45 < M3 < 70,$$

are established.

12. A black pigment composition for heat-shielding coatings as claimed in any one of claims 1 to 6, wherein the composition consists of a phthalocyanine blue pigment as the first pigment, a phthalocyanine green pigment as the second pigment, and third and fourth pigments as the at least one other chromatic pigment.

13. A black pigment composition for heat-shielding coatings as claimed in claim 12, wherein the third chromatic pigment is a benzimidazolone pigment, the fourth chromatic pigment is a diketopyrrolopyrrole pigment, and when the total amount in parts by weight of the third and fourth chromatic pigments is designated as M34, then

$$5 < Mb < 20,$$

$$1 < Mg < 30,$$

and

$$55 < M34 < 85$$

are established.

14. A black pigment composition for heat-shielding coatings as claimed in claim 12, wherein the composition comprises an inorganic yellow pigment as the third chromatic pigment, and a diketopyrrolopyrrole pigment and/or a naphthol pigment as the fourth chromatic pigment.

**15.** A black pigment composition for heat-shielding coatings as claimed in claim 14, wherein, when the total amount in parts by weight of the third and fourth chromatic pigments is designated as M34, then

$$2 < Mb < 15,$$

$$10 < Mg < 30,$$

and

$$60 < M34 < 88$$

are established.

**16.** A heat shielding black coating, which comprises, at least, a black pigment composition for heat-shielding coatings according to any one of claims 1 to 15, a binder, and a solvent.

**17.** A heat shielding black coating as claimed in claim 16, further comprising a white inorganic pigment.

**18.** A heat shielding black coating as claimed in claim 17, wherein the white inorganic pigment is a white pigment selected from titanium oxide, zinc oxide and aluminum oxide.

**19.** A heat shielding black coating as claimed in any one of claims 16 to 18, wherein the binder is a resin selected from an acrylic resin, an acrylic-silicone resin, a silicone resin, a fluororesin, a urethane resin, an unsaturated polyester resin and an alkyd resin.

**20.** Use of a heat shielding black coating according to any one of claims 16 to 19 for shading chromatic or achromatic coatings.

**21.** Use of a heat shielding black coating according to any one of claims 16 to 19 for coating a roof or outer wall of a building.

**Patentansprüche**

**1.** Schwarze Pigmentzusammensetzung für wärmeabschirmende Beschichtungen, umfassend ein Phthalocyaninblaupigment als ein erstes Pigment, ein Phthalocyaningrünpigment als ein zweites Pigment und mindestens ein weiteres chromatisches Pigment, wobei in Bezug auf die Mengen in Gewichtsteilen des Phthalocyaninblaupigments als Mb das Phthalocyaningrünpigment als Mg und die Summe des mindestens einen weiteren chromatischen Pigments als Mn festgesetzt werden, wobei
Mb + Mg + Mn = 100 ist und wobei 0,05 < Mg/Mb < 25 und
25 < Mg + 2,2 Mb < 50, bezogen auf 100 Gewichtsteile der gesamten Pigmentzusammensetzung.

**2.** Schwarze Pigmentzusammensetzung für wärmeabschirmende Beschichtungen nach Anspruch 1, wobei mindestens ein Pigment ausgewählt aus der Gruppe bestehend aus C.I. Pigment Blau 15:3, Pigment Blau 15:1, Pigment Blau 15:2, Pigment Blau 15:4 und Pigment Blau 15:6 als Phthalocyaninblaupigment verwendet wird.

**3.** Schwarze Pigmentzusammensetzung für wärmeabschirmende Beschichtungen nach Anspruch 1 oder 2, wobei C.I. Pigment Grün 7 und/oder C.I. Pigment Grün 36 als das Phthalocyaningrünpigment verwendet werden.

**4.** Schwarze Pigmentzusammensetzung für wärmeabschirmende Beschichtungen nach einem der Ansprüche 1 bis 3, wobei die Zusammensetzung ein anorganisches chromatisches Pigment und/oder ein organisches chromatisches Pigment als das mindestens eine weitere chromatische Pigment enthält.

**5.** Schwarze Pigmentzusammensetzung für wärmeabschirmende Beschichtungen nach Anspruch 4, wobei das anorganische chromatische Pigment mindestens eines, ausgewählt aus der Gruppe bestehend aus Kobaltblau, gelbem Eisenoxid, Viridian, Zinksulfid, Lithopon, Cadmium-Gelb, Zinnober, Cadmium-Rot, Chrom-Gelb, Molybdat-Orange, Zinkchromat, Strontium-Chromat, Ultramarin, Bismutvanadiumgelb, Vanadiumzinngelb, Vanadiumzirkonoxidgelb, Ferrocyaniden (Preußischblau) und Phosphaten (Manganviolett) ist.

6. Schwarze Pigmentzusammensetzung für wärmeabschirmende Beschichtungen nach Anspruch 4, wobei das organische chromatische Pigment mindestens eines ausgewählt aus der Gruppe bestehend aus Azopigmenten, Lackpigmenten, Thioindigopigmenten, Anthrachinonpigmenten, Perylenpigmenten, Perinonpigmenten, Diketopyrrolopyrrolpigmenten, Dioxazinpigmenten, Phthalocyaninpigmenten, Chinophthalonpigmenten, Chinacridonpigmenten, Isoindolinpigmenten und Isoindolinonpigmenten ist.

7. Schwarze Pigmentzusammensetzung für wärmeabschirmende Beschichtungen nach einem der Ansprüche 1 bis 6, wobei die Zusammensetzung aus einem Phthalocyaninblaupigment als das erste Pigment, einem Phthalocyaningrünpigment als das zweite Pigment und einem dritten Pigment als das mindestens eine andere chromatische Pigment besteht.

8. Schwarze Pigmentzusammensetzung für wärmeabschirmende Beschichtungen nach Anspruch 7, wobei die Zusammensetzung ein anorganisches Pigment als das dritte chromatische Pigment umfasst.

9. Schwarze Pigmentzusammensetzung für wärmeabschirmende Beschichtungen nach Anspruch 7, wobei die Zusammensetzung mindestens ein chromatisches Pigment, ausgewählt aus der Gruppe bestehend aus einem Anthrachinonpigment, einem Benzimidazolonpigment und einem Diketopyrrolopyrrolpigment, als das dritte chromatische Pigment umfasst.

10. Schwarze Pigmentzusammensetzung für wärmeabschirmende Beschichtungen nach Anspruch 7, wobei die Zusammensetzung ein Anthrachinonpigment C.I. Pigment Rot 168 als das dritte chromatische Pigment umfasst.

11. Schwarze Pigmentzusammensetzung für wärmeabschirmende Beschichtungen nach Anspruch 10, wobei für die Mengen in Gewichtsteilen des Phthalocyaninblaupigments als Mb, des Phthalocyaningrünpigments als Mg und des dritten chromatischen Pigments als M3

$$1 < Mb < 10,$$

$$25 < Mg < 45$$

und

$$45 < M3 < 70$$

festgesetzt sind.

12. Schwarze Pigmentzusammensetzung für wärmeabschirmende Beschichtungen nach einem der Ansprüche 1 bis 6, wobei die Zusammensetzung aus einem Phthalocyaninblaupigment als das erste Pigment, einem Phthalocyaningrünpigment als das zweite Pigment und einem dritten und vierten Pigment als das mindestens eine weitere chromatische Pigment besteht.

13. Schwarze Pigmentzusammensetzung für wärmeabschirmende Beschichtungen nach Anspruch 12, wobei das dritte chromatische Pigment ein Benzimidazolonpigment ist, das vierte chromatische Pigment ein Diketopyrrolopyrrolpigment ist, und wenn die Gesamtmenge in Gewichtsteilen des dritten und vierten chromatischen Pigments als M34 bezeichnet wird, dann

$$5 < Mb < 20,$$

$$1 < Mg < 30$$

und

$$55 < M34 < 85$$

festgesetzt sind.

14. Schwarze Pigmentzusammensetzung für wärmeabschirmende Beschichtungen nach Anspruch 12, wobei die Zusammensetzung ein anorganisches gelbes Pigment als das dritte chromatische Pigment und ein Diketopyrrolopyrrolpigment und/oder ein Naphtholpigment als das vierte chromatische Pigment umfasst.

15. Schwarze Pigmentzusammensetzung für wärmeabschirmende Beschichtungen nach Anspruch 14, wobei, wenn die Gesamtmenge in Gewichtsteilen des dritten und vierten chromatischen Pigments als M34 bezeichnet wird, dann

$$2 < Mb < 15,$$

$$10 < Mg < 30$$

und

$$60 < M34 < 88$$

festgesetzt sind.

16. Wärmeabschirmende schwarze Beschichtung, die mindestens eine schwarze Pigmentzusammensetzung für wärmeabschirmende Beschichtungen nach einem der Ansprüche 1 bis 15, ein Bindemittel und ein Lösungsmittel umfasst.

17. Wärmeabschirmende schwarze Beschichtung nach Anspruch 16, ferner umfassend ein weißes anorganisches Pigment.

18. Wärmeabschirmende schwarze Beschichtung nach Anspruch 17, wobei das anorganische Weißpigment ein weißes Pigment ist, ausgewählt aus Titanoxid, Zinkoxid und Aluminiumoxid.

19. Wärmeabschirmende schwarze Beschichtung nach einem der Ansprüche 16 bis 18, wobei das Bindemittel ein Harz ist, ausgewählt aus einem Acrylharz, einem Acrylsilikonharz, einem Silikonharz, einem Fluorharz, einem Urethanharz, einem ungesättigten Polyesterharz und einem Alkydharz.

20. Verwendung einer wärmeabschirmenden schwarzen Beschichtung nach einem der Ansprüche 16 bis 19 für die Abschirmung chromatischer oder achromatischer Beschichtungen.

21. Verwendung einer wärmeabschirmenden schwarzen Beschichtung nach einem der Ansprüche 16 bis 19 zur Beschichtung eines Daches oder einer Außenwand eines Gebäudes.

**Revendications**

1. Composition de pigments noire pour des revêtements de protection thermique, comprenant un pigment bleu phtalocyanine en tant que premier pigment, un pigment vert phtalocyanine en tant que deuxième pigment et au moins un autre pigment chromatique, dans laquelle, en ce qui concerne les quantités en parties en poids du pigment bleu phtalocyanine désignée Mb, du pigment vert phtalocyanine désignée Mg et du total de l'au moins un autre pigment chromatique désignée Mn, dans laquelle les relations

Mb + Mg + Mn = 100 et dans laquelle 0,05 < Mg/Mb < 25 et

25 < Mg + 2,2Mb < 50 sont satisfaites, sur la base de 100 parties en poids de la composition totale de pigments.

2. Composition de pigments noire pour des revêtements de protection thermique selon la revendication 1, dans laquelle au moins un pigment choisi dans le groupe constitué par les CI pigment bleu 15:3, pigment bleu 15:1, pigment bleu 15:2, pigment bleu 15:4 et pigment bleu 15:6 est utilisé en tant que pigment bleu phtalocyanine.

3. Composition de pigments noire pour des revêtements de protection thermique selon la revendication 1 ou 2, dans laquelle le CI pigment vert 7 et/ou le CI pigment vert 36 sont utilisés en tant que pigment vert phtalocyanine.

4. Composition de pigments noire pour des revêtements de protection thermique selon l'une quelconque des revendications 1 à 3, la composition comprenant un pigment chromatique inorganique et/ou un pigment chromatique organique en tant que l'au moins un autre pigment chromatique.

5. Composition de pigments noire pour des revêtements de protection thermique selon la revendication 4, dans laquelle le pigment chromatique inorganique en est au moins un choisi dans le groupe constitué par le bleu de cobalt, l'oxyde de fer jaune, le vert émeraude, le sulfure de zinc, le lithopone, le jaune de cadmium, le vermillon, le rouge de cadmium, le jaune de chrome, l'orange de molybdate, le chromate de zinc, le chromate de strontium, le bleu outremer, le jaune de bismuth et de vanadium, le jaune de vanadium et d'étain, le jaune de vanadium et de zircone, les ferrocyanures (le bleu de Prusse) et les phosphates (le violet de manganèse).

6. Composition de pigments noire pour des revêtements de protection thermique selon la revendication 4, dans laquelle le pigment chromatique organique en est au moins un choisi dans le groupe constitué par les pigments azoïques, les pigments laqués, les pigments thioindigos, les pigments anthraquinones, les pigments pérylènes, les pigments périnones, les pigments dicétopyrrolopyrroles, les pigments dioxazines, les pigments phtalocyanines, les pigments quinophtalones, les pigments quinacridones, les pigments isoindolines et les pigments isoindolinones.

7. Composition de pigments noire pour des revêtements de protection thermique selon l'une quelconque des revendications 1 à 6, la composition étant constituée d'un pigment bleu phtalocyanine en tant que premier pigment, d'un pigment vert phtalocyanine en tant que deuxième pigment et d'un troisième pigment en tant que l'au moins un autre pigment chromatique.

8. Composition de pigments noire pour des revêtements de protection thermique selon la revendication 7, la composition comprenant un pigment inorganique en tant que troisième pigment chromatique.

9. Composition de pigments noire pour des revêtements de protection thermique selon la revendication 7, la composition comprenant au moins un pigment chromatique choisi dans le groupe constitué par un pigment anthraquinone, un pigment benzimidazolone et un pigment dicétopyrrolopyrrole en tant que troisième pigment chromatique.

10. Composition de pigments noire pour des revêtements de protection thermique selon la revendication 7, la composition comprenant un pigment anthraquinone CI pigment rouge 168 en tant que troisième pigment chromatique.

11. Composition de pigments noire pour des revêtements de protection thermique selon la revendication 10, dans laquelle, pour les quantités en parties en poids du pigment bleu phtalocyanine désignée Mb, du pigment vert phtalocyanine désignée Mg et du troisième pigment chromatique désignée M3, les relations

$$1 < Mb < 10,$$

$$25 < Mg < 45$$

et

$$45 < M3 < 70,$$

sont satisfaites.

12. Composition de pigments noire pour des revêtements de protection thermique selon l'une quelconque des revendications 1 à 6, la composition étant constituée d'un pigment bleu phtalocyanine en tant que premier pigment, d'un pigment vert phtalocyanine en tant que deuxième pigment et de troisième et quatrième pigments en tant que l'au moins un autre pigment chromatique.

13. Composition de pigments noire pour des revêtements de protection thermique selon la revendication 12, dans laquelle le troisième pigment chromatique est un pigment benzimidazolone, le quatrième pigment chromatique est un pigment dicétopyrrolopyrrole et lorsque la quantité totale en parties en poids des troisième et quatrième pigments chromatiques est désignée M34, alors les relations

$$5 < Mb < 20,$$

$$1 < Mg < 30$$

et

$$55 < M34 < 85$$

sont satisfaites.

14. Composition de pigments noire pour des revêtements de protection thermique selon la revendication 12, la composition comprenant un pigment jaune inorganique en tant que troisième pigment chromatique et un pigment dicétopyrrolopyrrole et/ou un pigment naphtol en tant que quatrième pigment chromatique.

15. Composition de pigments noire pour des revêtements de protection thermique selon la revendication 14, dans laquelle, lorsque la quantité totale en parties en poids des troisième et quatrième pigments chromatiques est désignée M34, alors les relations

$$2 < Mb < 15,$$

$$10 < Mg < 30$$

et

$$60 < M34 < 88$$

sont satisfaites.

16. Revêtement noir de protection thermique, qui comprend au moins une composition de pigments noire pour des revêtements de protection thermique selon l'une quelconque des revendications 1 à 15, un liant et un solvant.

17. Revêtement noir de protection thermique selon la revendication 16, comprenant en outre un pigment inorganique blanc.

18. Revêtement noir de protection thermique selon la revendication 17, dans lequel le pigment inorganique blanc est un pigment blanc choisi entre l'oxyde de titane, l'oxyde de zinc et l'oxyde d'aluminium.

19. Revêtement noir de protection thermique selon l'une quelconque des revendications 16 à 18, dans lequel le liant est une résine choisie entre une résine acrylique, une résine acrylique-silicone, une résine de silicone, une résine fluorée, une résine d'uréthane, une résine de polyester insaturé et une résine alkyde.

20. Utilisation d'un revêtement noir de protection thermique selon l'une quelconque des revendications 16 à 19 pour le nuançage de revêtements chromatiques ou achromatiques.

21. Utilisation d'un revêtement noir de protection thermique selon l'une quelconque des revendications 16 à 19 pour le revêtement d'un toit ou d'un mur extérieur d'un bâtiment.

Fig. 1

Fig. 2

**EP 2 914 667 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 05293434 A
- JP 2009202494 A
- JP 2011068737 A
- WO 03054071 A2
- US 5540998 A
- WO 2005030878 A1
- EP 1127926 A1